# EUROPEAN PATENT SPECIFICATION

(11) **EP 1 435 066 B1**
(45) Date of publication and mention of the grant of the patent: **02.08.2006**
(21) Application number: 02772721.3
(22) Date of filing: 10.10.2002
(51) Int. Cl.: G06K 19/073, G06K 7/00

(54) **MANAGEMENT OF BYTE TRANSMISSION IN A SMARTCARD**
BYTE-ÜBERTRAGUNGSVERWALTUNG IN EINER CHIPKARTE
GESTION DE TRANSMISSION DES MULTIPLETS DANS UNE CARTE INTELLIGENTE

(30) Priority: 10.10.2001 FR 0113068
(43) Date of publication of application: 07.07.2004
(73) Proprietor: Axalto S.A., 92120 Montrouge (FR); Schlumberger Malco, Inc., Owings Mills, MD 21117 (US)
(72) Inventor: MENNECART, José, F-45370 Dry (FR); GIEN, Christophe, F-45650 Saint Jean le Blanc (FR)
(74) Representative: Cassagne, Philippe M.J.
(86) International application number: PCT/IB2002/004159
(87) International publication number: WO 2003/032244

(56) References cited:
- EP-A- 0 881 590
- EP-A- 1 109 129
- WO-A-01/16865
- DE-A- 19 928 939
- FR-A- 2 806 505

## Description

### Technical field

This invention concerns the management of byte transmission in a smartcard. The example chosen to illustrate the invention is that of transmission of the response message known as the ATR (Answer-To-Reset) message defined in ISO (international standardisation organisation) standards 7816-3 and 7816-4. This message is transmitted by the smartcard to the card reader to which it is connected when the smartcard is powered up by the reader.

Note that in the context of the invention, a reader is a device which can exchange information with the smartcard.

### State of the art technology

Generally, powering up the card consists of applying an action received as an interrupt by the microprocessor. This action is generally called "RESET". It has an interrupt vector or code sequence located at a certain address in memory. This address also generally contains a jump instruction to a start sequence.

Communication with a smartcard is carried out via a reader. Note that standard ISO 7816-3 defines the communication protocol which must be used by the cards to communicate with the exterior. This section describes the electrical signals and the information which is exchanged during all communicatioris. The currents, voltages and signal frequencies are standardised, as well as the format of the data exchanged during a communication between a card and a card reader.

When the smartcard is powered up, it transmits a message to the reader. This message from the card on start-up is generally called the ATR (Answer-To-Reset) in compliance with standards OSI 7816-3 and 7816-4. This message includes information indicating, in particular, to the reader the smartcard's abilities concerning the communication protocols. For example, the card indicates to the reader:
- its protocol type (T=0, T=1, etc.)
- the transmission speed (e.g.: 9600 baud, 38400 baud, etc.)
- the command execution time-out
- etc.
   The ATR message also includes historical information. This information includes the product identification, version, type of chip used, card status, etc.
   The ATR message consists of a number of bytes. In most smartcards with microcontroller, the bytes in this message are transmitted sequentially. Generally, since card operating systems are becoming more and more complicated and since security is increasingly important, during transmission of an ATR message the operating system must carry out a certain number of processing operations before allowing the user to take control. In concrete terms, the operating system transmits a first byte of the ATR and then carries out a first processing operation. After this processing operation, the operating system transmits a second byte and then carries out a second processing operation. After this second processing operation, the operating system transmits a third byte and so on. The processing operations can be more or less complicated, with variable execution times. Due to this variable execution time, it is therefore very difficult to determine the time interval between each transmission of bytes in an ATR message.
   Standards exist, however, which define in particular,
- a maximum time interval which must not be exceeded between the transmissions of two bytes in the ATR message,
- a maximum global transmission duration for the ATR message which must not be exceeded.

These standards must be respected so that the reader can communicate with the smartcard. When these time intervals are not respected, the reader fails to recognise the card and most often, a mechanism included in the reader ejects the card from its housing. Ejection of the card is a disadvantage for the card user.

Such kind of known technique for sending an ATR message as above described is mentioned in particular in EP 881590.

### Summary of the invention

One objective is therefore to improve the satisfaction of the card user.

To achieve this objective, it is proposed according to the invention a smartcard as recited in claim 1.

The external module acts as assistant by monitoring the operating system. In its role as assistant, it can force the operating system to trigger byte transmission. Consequently, the inter-byte time intervals are better respected. The invention therefore avoids ejection of the card, improving the satisfaction of the card user.

It will be easier to understand the invention on reading the description below, given as an example and referring to the attached drawings.

In the drawings:
- figure 1 is a diagrammatic view of the architecture to which the invention can be applied,
- figure 2 is a diagrammatic view of a smartcard, this architecture showing in particular the module external to the operating system.
- Figures 3A and 3B are algorithms illustrating the various steps of a first example of realisation.
- Figure 4 is a diagrammatic view of the information flow resulting from this first example of realisation, illustrating the exchange of information between a card reader, the operating system and the external module according to this solution.
- Figure 5 is an algorithm illustrating a variant of this first example of realisation.
- Figure 6 is a diagrammatic view of the information flow resulting from the variant of the first example of realisation, illustrating the exchange of information between the card reader, the operating system and the external module.
- figure 7 is an algorithm illustrating a second example of realisation of the invention in which the external module is a software agent.

### Detailed description of examples illustrating the invention

To simplify the description, the same elements illustrated in the drawings have the same references.

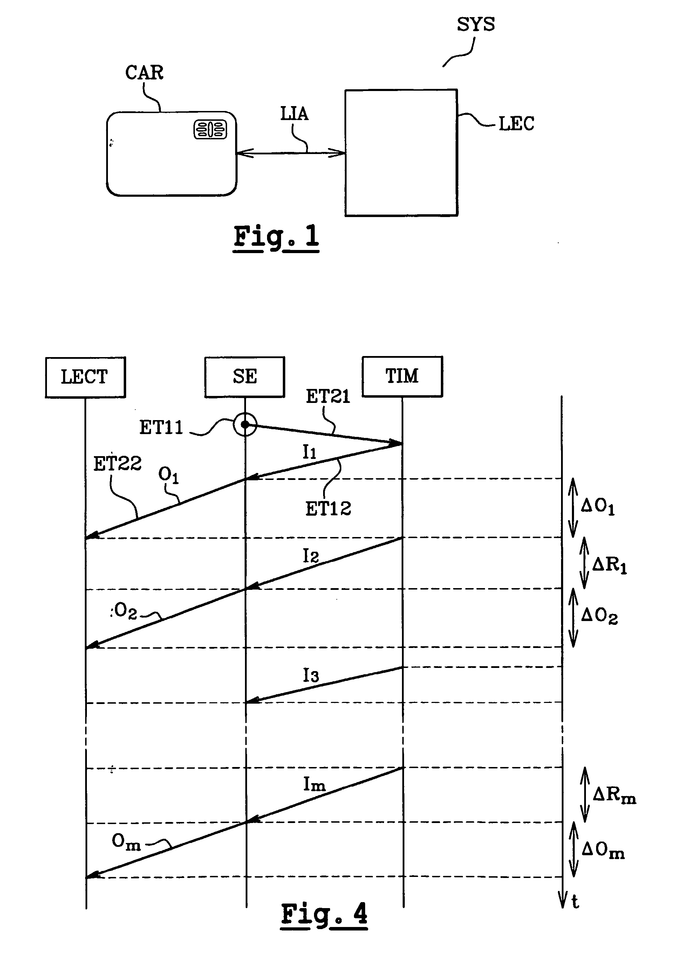

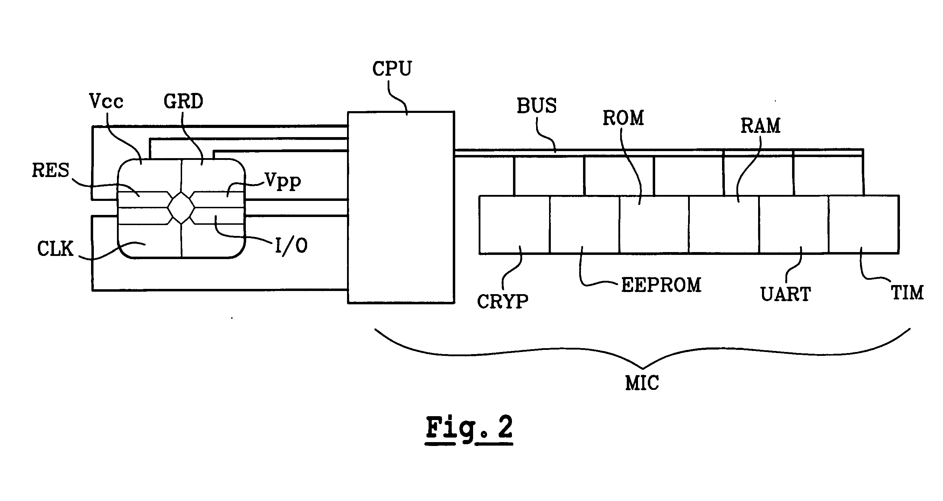

Figure 1 shows a system SYS to which this invention can be applied. This system SYS includes a smartcard CAR and a smartcard reader LEC connected together via communication links LIA. Communication messages transit on these links preferably using a format in compliance with standard ISO 7186-4. Figure 2 shows a diagrammatic view of the architecture of a smartcard CAR. The smartcard CAR includes an electronic module MOD. The module MOD includes a microcontroller MIC and contacts to communicate with the exterior. Generally, a microcontroller includes:
- a microprocessor CPU to execute the commands,
- non volatile memories ROM (Read Only Memory), whose content is burnt in in the factory and therefore cannot be niodified. An encryption algorithm, the operating system SE, application programming interfaces (API), etc. can therefore be written in the ROM;
- non volatile memories, for example EEPROM (electrically erasable programmable read only memory). It is generally used to store data specific to each card, for example the cardholder identity, the access rights to the services, the file systems, all the application programs of the card, etc.
- volatile memories RAM, work space to execute the card commands,
- security units CRYP for data encryption,
- units taking into consideration the power supply voltage, clock speed, etc.,
- an input/output port, of type UART (Universal Asynchronous Receiver Transmitter) for example, known by those skilled in the art, for communication between the card CAR and the reader LEC.
- a series of buses BUS connecting the various parts together for data, address and command exchange.
   The module also includes contacts to communicate with the reader, in particular,
- input-output I/O contacts,
- electrical contacts VCC and VPP, and the ground GND (the electrical contact VPP is generally used to supply a voltage for programming, whereas the contact VCC is used to power the card),
- a contact RES to reset the card or power it up.

The operating system has a command set which it can execute upon request. It manages the communication with the exterior, using a standardised and secured communication protocol. The commands given are validated by the operating system before being executed.

When the card CAR is powered up, it transmits a message to the reader LEC. This message is generally called the ATR (Answer-To-Reset) message. This ATR message generally consists of a number of bytes.

The problem, as mentioned in the introduction, concerns the time interval between two byte transmissions in the ATR message.

According to a first example of realisation, the solution consists of using a timer device, such as a programmable clock TIM (Timer). A programmable clock is a circuit using a clock to generate interrupt signals every "n" clock cycles. This clock is said to be programmable since its clock frequency can be modified.

The programmable clock TIM is included in the smartcard CAR.

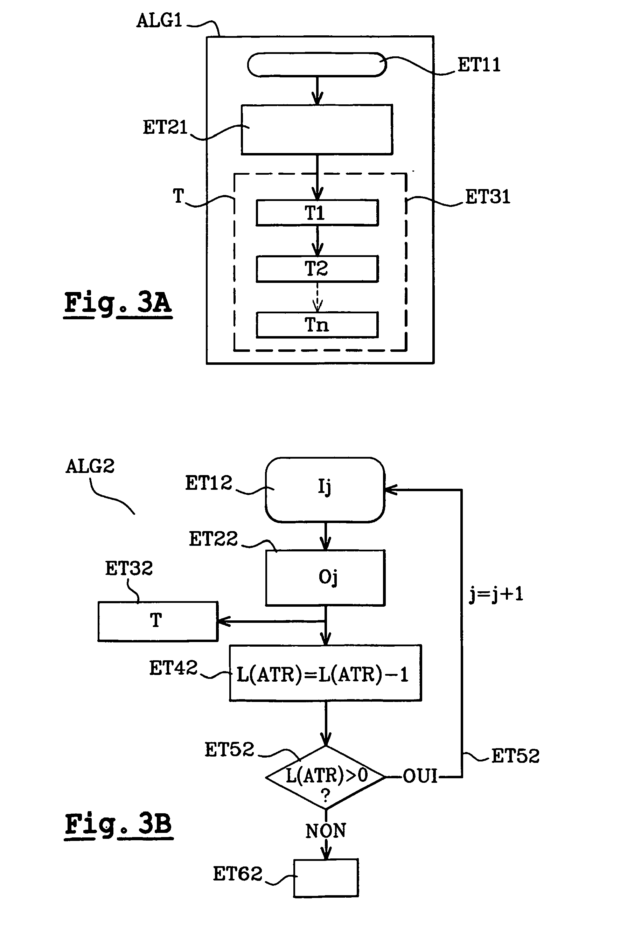

To illustrate the invention, so that it is easier to understand, we will refer to the steps of algorithms ALG 1 and ALG2 on figures 3A and 3B, respectively.

These two algorithms ALG1 and ALG2 interact. In other words, when the operating system caries out processing operations, the algorithm ALG1 can at any time be interrupted by an interrupted triggered by the programmable clock so that ATR bytes can be transmitted.

In our example of realisation, the first algorithm ALG1 includes the following main steps:
- A first step ET11 consists of powering up the card.
- During a second step ET21, the operating system activates the programmable clock TIM so that it triggers interrupts for transmission of ATR bytes.
- During a third step ET31, the operating system performs a series of processing operations (Tl-Tn). In our example, the parameter "n" is the number of processing operations to be performed.

Steps ET21 and ET31 can be executed in any order. Obviously, other steps may be implemented. For example, activation may not take place directly after powering up. Processing steps may be planned between steps ET11 and ET31.

The second algorithm ALG2 illustrates the steps in transmission of ATR bytes Oj (j=l,..., m). This algorithm ALG2 is implemented after being activated in the second step ET12 of the first algorithm. This algorithm ALG2 is a programming loop including the following steps:
- During a first step ET12, the programmable clock triggers an interrupt I1 which can interrupt the operating system. The operating system interrupts its current work, for example a processing operation (Tl-Tn) in progress if it had already started.
- In step ET22, after receiving the interrupt I1, the operating system jumps to a code sequence planned for transmission of ATR bytes and starts the transmission of a first ATR byte O1.
- Then, a step ET42 consists of determining whether the ATR message includes other bytes to be transmitted. In our example of realisation, this step consists of determining the number L(ATR) of bytes still to be transmitted in the ATR message and of decrementing this number by one unit (L(ATR)-1) after each transmission of one byte.
- During a step ET52, the number of bytes still to be transmitted is checked. There are now two possibilities:

### 1^{st} possibility:

If the number of bytes L(ATR) still to be transmitted is greater than one, step ET12 is repeated. During a step ET12, the programmable clock automatically triggers a new interrupt I2 which can interrupt the execution of algorithm ALG 1 again. Further to this new interrupt I2, the operating system transmits a second byte 02. The process continues, the value of the number of bytes L(ATR) not yet transmitted is decremented by one unit and the index j is also incremented by one unit. When all bytes have been transmitted, preferably a message informs the operating system that transmission of the bytes in the ATR message has finished.

### 2^{nd} possibility:

If the check carried out in step ET52 shows that there are no more bytes to be transmitted, the processing operations can continue until they are finished.

Preferably, after transmitting a byte On, the operating system starts a processing operation during a step ET32, or continues it if it had started before the interrupt I1. For example, during the check in step ET52 to determine the number of bytes still to be transmitted, the operating system can continue the processing it had interrupted previously until a new interrupt is triggered.

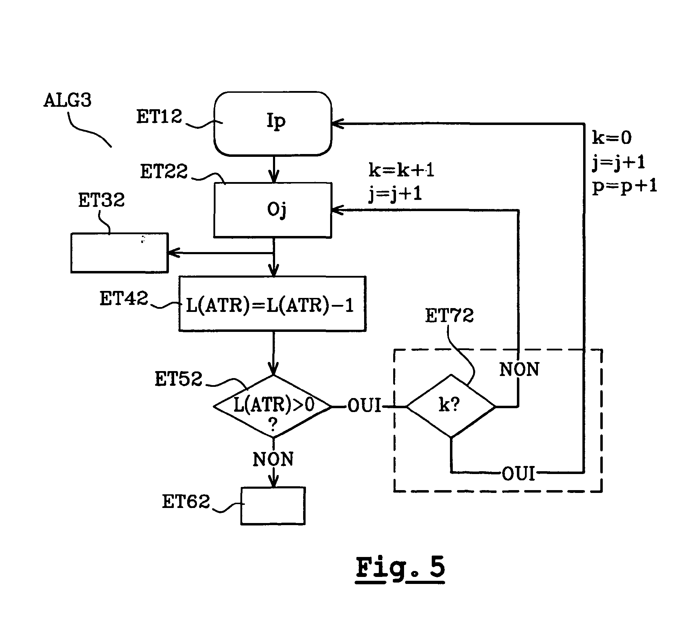

Figure 4 illustrates the exchange of information with time between the reader LEC, the operating system and the programmable clock TIM. This figure indicates more clearly the time when the transmission of bytes in the ATR message is triggered. On this figure, the delays for transmission of an interrupt or a byte ΔOn are far removed from reality. To obtain a better understanding of the correspondence between figures 3A-3B and 4, in the remainder of the description, the steps of figures 3A and 3B are written between parentheses.

After powering up (ET11), the operating system transmits a first message to activate the programmable clock (ET21)

Once activated, the programmable clock transmits an interrupt I1 to the operating system so that it interrupts its current processing operations (ET12).

After receiving the interrupt, the operating system transmits a first byte O1 to the card reader (ET22). The transmission time is for example ΔO1.

The process continues, a second interrupt I2 is transmitted to the operating system, and after reception of the interrupt the operating system transmits a second byte 02 to the card reader. The transmission time is for example ΔO2.

This figure shows the time interval ΔRm between the end of transmission of a byte O(m-1) and the time when transmission of the next byte O(m) is triggered. This interval is approximately reduced to the time required to transmit an interrupt.

Another variant of the invention could consist of transmitting at least two bytes after each interrupt. Instead of transmitting one byte after an interrupt, the programmable clock can be programmed to allow, after each interrupt, transmission of k bytes. The programmable clock must be programmed for this variant so that there is sufficient time between two interrupts to transmit these k bytes. Figure 5 is a view of an algorithm ALG3 illustrating this variant. A step ET72 has been added on this figure as compared with the algorithm ALG2 shown on figure 2. This step ET72 includes a step to check the number of bytes transmitted successively after an interrupt. There are two possibilities:

### 1^{st} possibility

If the number of bytes transmitted is not equal to k, the operating system transmits another byte in step ET22. The number k is then incremented by one unit and the index j incremented by one unit.

### 2^{nd} possibility

If the number of bytes transmitted is equal to k, the operating system transmits an interrupt and step ET12 is carried out. The parameter k is then reset so that the check in step ET72 can be carried out.

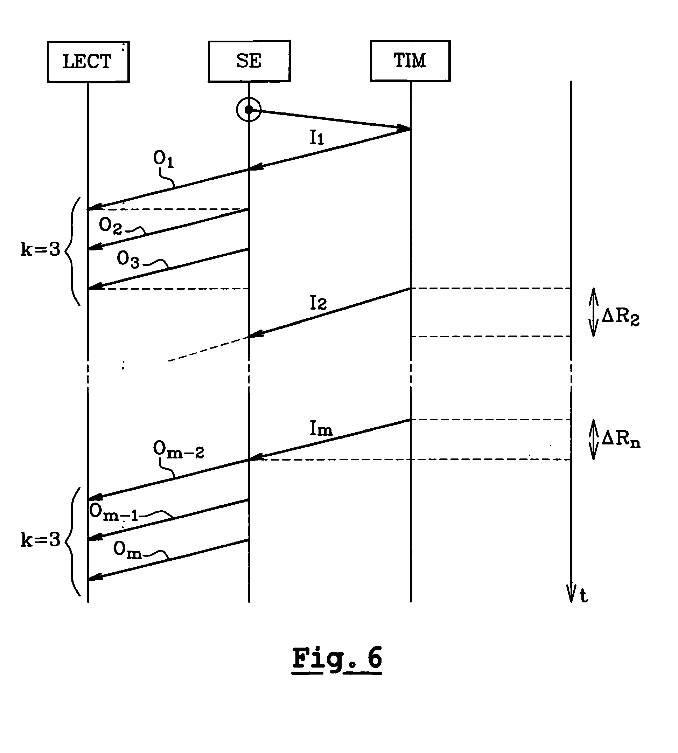

Figure 6 illustrates the flow of information with time t between the reader LEC, the operating system and the programmable clock TIM. This figure is an example in which three bytes have been transmitted after each interrupt (k=3). This figure clearly shows that between two interrupts, the bytes are transmitted successively without a break. Obviously, as on figure 4, the delays for transmission of an interrupt or a byte are far removed from reality.

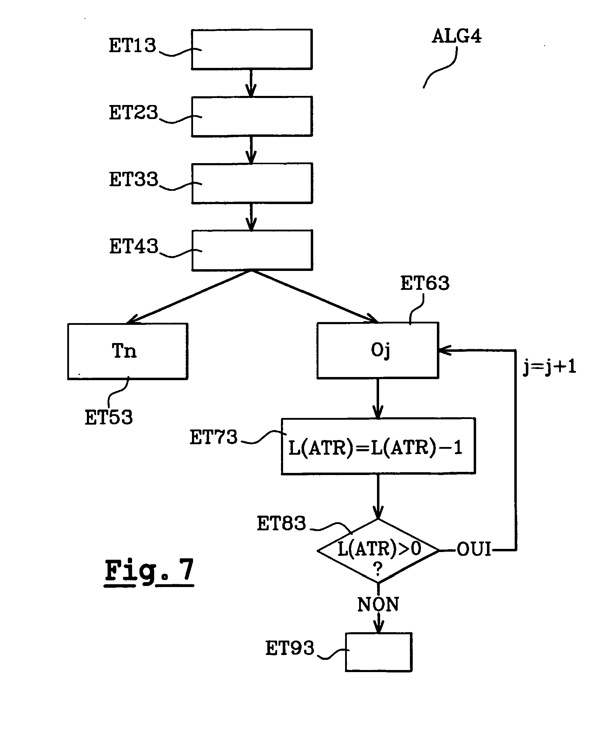

Figure 7 is an algorithm ALG4 illustrating a second example of realisation in which an agent external to the operating system is created. In this example of realisation, it is no longer necessary to interrupt the operating system, which was the case in the first example of realisation. This agent is a software program whose function is to trigger the transmission of bytes in the ATR message as well as to transmit these bytes.

This agent can be, for example, the UART component described above. It would be programmed to periodically transmit a certain number of bytes. An agent may also be a module including a second microprocessor which would be responsible for triggering byte transmission and transmitting bytes.

The algorithm ALG4 illustrating this second example of realisation includes the following steps:
In step ET13 of the algorithm ALG4, the smartcard is powered up.
In step ET23, the microprocessor receives this command RESET and activates the agent. Activation consists of starting the agent.
In step ET33, the operating system transmits all bytes of the ATR message to the agent.
In step ET43, the bytes of the ATR message are stored in a memory, for example a buffer memory associated with the agent.

After activation and reception of the bytes in the ATR message, the agent becomes responsible for triggering byte transmission and transmitting these bytes. The operating system can then concentrate, possibly in parallel, in step 53, on other tasks such as the processing operations (Tl-Tn). The transmission method may be that described in figure 3B. Byte transmission then consists, during a step ET63, of transmitting a byte as in step ET22 on figure 3B. Another step ET73 consists, as in step ET42 on figure 3B, of determining whether the ATR message includes other bytes to be transmitted. In our example of realisation, this step consists of determining the number L(ATR) of bytes still to be transmitted in the ATR message and of decrementing this number by one unit after each transmission of one byte. Another step ET83, identical to step ET52 on figure 3B, consists of checking the number of bytes still to be transmitted. There are now two possibilities:

### 1^{st} possibility:

If the number of bytes L(ATR) still to be transmitted is greater than one, step ET63 is repeated. The agent transmits a second byte 02. The process continues, the value of the number of bytes not yet transmitted is decremented by one unit. When all bytes have been transmitted, preferably a message informs the operating system that transmission of the bytes in the ATR message has finished.

### 2^{nd} possibility:

If the check carried out in step ET83 shows that there are no more bytes to be transmitted, a message informs the operating system during a step ET93 that transmission of bytes in the ATR message has finished.

Note that the transmission process chosen to illustrate this second example corresponds to algorithm ALG2 on figure 3B, but could have just as easily been algorithm ALG3 on figure 5.

Note also that, in step ET33 described previously, the operating system can transmit to the agent all bytes of the ATR message in several goes depending on both the size of the buffer memory and the number of bytes in the ATR message to be transmitted.

Generally, the invention concerns a smartcard CAR, wherein it comprises a module (TIM) external to the operating system to manage the triggering of byte transmission. In our example of realisation, the module triggers the transmission of each byte in the series of bytes forming the ATR message. Obviously, the invention is not limited to a card comprising one module, but applies to any card comprising at least one module. We have seen that this module (TIM) includes a program which is activated by the operating system before use.

We have seen in a first example of realisation that the module TIM is a programmable clock which generates, after its activation, interrupts which can interrupt any processing operation in progress of the operating system and which can force the operating system to trigger byte transmission.

We have also seen in the description that this module TIM could be an agent including a program responsible, after its activation, for both triggering byte transmission and transmitting the bytes. To implement this example, the agent requires a memory, for example a buffer memory. The agent stores in this memory all or some of the bytes transmitted by the operating system. Preferably, this memory is large enough to contain all the bytes of the ATR message.

As we have seen previously, the invention applies especially to the reset bytes known as the ATR (Answer-To-Reset) bytes by those skilled in the art. These ATR bytes are transmitted by the card after it is powered up.

The solution also concerns the smartcard system including a smartcard and a smartcard reader. We have seen that this system includes one (or several) module(s) (TIM) external to the card's operating system to manage the triggering of byte transmission.

To perform the triggering step, in our first example of realisation, the module (TIM) generates interrupts which can interrupt any processing operation in progress of the operating system included in the card and which can trigger the transmission, by the operating system, of at least one byte (ATR) by the operating system to the reader.

In the second example of realisation, we have seen that the module could be an "intelligent" software agent. After activation of this agent, the method comprises a step to load all or some of the bytes in a memory associated with this agent, this agent triggering transmission of the bytes loaded in memory to the reader.

The triggering is carried out by a program. This program includes program code instructions to execute a step to activate said module so that it triggers the transmission of bytes from the card to the reader (LEC).

We now see that this invention offers other clear advantages. As well as providing perfect control of the times when bytes of the ATR message are triggered, we have seen that the interrupts can be triggered by a module present in the smartcard, i.e. a programmable clock. A second example of realisation has also shown that the notion of interrupt can be avoided by creating a software agent external to the operating system. The advantage provided by this software is that, after activation by the operating system, it manages not only the triggering of byte transmission but also transmission of the bytes.

Moreover, this invention offers other non negligible advantages. By fully controlling the triggering times, control is also provided of the global duration required for transmission of all bytes in the ATR message. The global duration required to transmit the ATR message is controlled and can therefore be modulated, so that the end of transmission of the ATR message can be synchronised with the time when the operating system is ready to receive an APDU command from the reader.

## Claims

1. A smartcard (CAR) including a processor (CPU) and a memory, said processor and memory implementing an operating system,
said smartcard being arranged for transmitting to a reader (LEC) an initial message specifying data to the reader concerning the smartcard's communication abilities (ATR),
said initial message comprising a series of sub-messages to be transmitted to the reader
**characterized in that** the card includes a module which is separate from the operating system and which periodically triggers the transmitting of one or several sub-messages among a remaining series of sub-messages which still have not been transmitted to the reader.

2. The smartcard according to claim 1, **characterized in that** said separate module includes an algorithm (ALG2) which is separate from the operating system (ALG1) and which interacts with a processing algorithm of the operating system (ALG1) so as to interrupt said processing algorithm of the operating system and thereby trigger transmitting of a sub-message by the operating system.

3. The smartcard according to claim 1, **characterized in that** said separate module includes a memory for loading said series of sub-messages from the operating system into said memory of the separate module, and said separate module periodically triggers the transmitting of sub-messages among a remaining series of sub-messages loaded in the memory of the separate module and which have still not been transmitted.

4. The smartcard according to claim 1, **characterized in that** the separate module includes a clock for timely controlling said triggering of the transmitting of sub-messages.

5. The smartcard according to claim 1, **characterized in that** the separate module includes a separate processing device which is separate from said processor and memory implementing the operating system.

6. The smartcard according to claim 1, **characterized in that** the initial message is an Answer-To-Reset message.

## Patentansprüche

1. Eine einen Prozessor (CPU) und einen Speicher umfassende Smartkarte (CAR), wobei besagter Prozessor und besagter Speicher ein Betriebssystem implementieren, wobei besagte Smartkarte ausgelegt ist, um einem Lesegerät (LEC) eine Anfangsmeldung mit Angabe von Daten für das Lesegerät über die Kommunikationsfähigkeiten der Smartkarte (ATR) zu übertragen, wobei besagte Anfangsmeldung eine Reihe von Untermeldungen umfasst, die an das Lesegerät zu übermitteln sind, **dadurch gekennzeichnet, dass** die Karte ein vom Betriebssystem getrenntes Modul umfasst, welches in regelmäßigen Abständen die Übermittlung einer oder mehrerer Untermeldungen aus einer verbleibenden Reihe von noch nicht an das Lesegerät gesandten Untermeldungen auslöst.

2. Die Smartkarte nach Anspruch 1, **dadurch gekennzeichnet, dass** besagtes getrenntes Modul einen Algorithmus (ALG2) umfasst, welcher vom Betriebssystem (ALG1) getrennt ist und welcher mit einem Verarbeitungsalgorithmus des Betriebssystems (ALG1) in Wechselwirkung steht, so dass besagter Verarbeitungsalgorithmus des Betriebssystems unterbrochen und dabei die Übermittlung einer Untermeldung durch das Betriebssystem ausgelöst wird.

3. Die Smartkarte nach Anspruch 1, **dadurch gekennzeichnet, dass** besagtes getrenntes Modul einen Speicher zum Laden besagter Reihe von Untermeldungen aus dem Betriebssystem in besagten Speicher des getrennten Moduls aufweist, und wobei besagtes getrenntes Modul in regelmäßigen Abständen die Übermittlung von Untermeldungen aus einer verbleibenden Reihe von in den Speicher des getrennten Moduls geladenen und noch nicht übermittelten Untermeldungen auslöst.

4. Die Smartkarte nach Anspruch 1, **dadurch gekennzeichnet, dass** das getrennte Modul einen Taktgeber zur zeitgesteuerten besagten Auslösung der Übermittlung von Untermeldungen aufweist.

5. Die Smartkarte nach Anspruch 1, **dadurch gekennzeichnet, dass** das besagte Modul eine getrennte Verarbeitungsvorrichtung aufweist, welche von besagtem Prozessor und Speicher zur Implementierung des Betriebssystems getrennt ist.

6. Die Smartkarte nach Anspruch 1, **dadurch gekennzeichnet, dass** die Anfangsmeldung eine Antwort auf einen Reset-Befehl darstellt.

## Revendications

1. Carte à microprocesseur (CAR) comprenant un processeur (CPU) et une mémoire, ledit processeur et ladite mémoire mettant en oeuvre un système d'exploitation, ladite carte à microprocesseur étant conçue pour transmettre à un lecteur (LEC) un message initial spécifiant des données au lecteur, qui concerne les aptitudes à la communication de la carte à microprocesseur (ATR), ledit message initial comprenant une série de sous-messages à transmettre au lecteur, **caractérisée en ce que** la carte comprend un module qui est séparé du système d'exploitation et qui déclenche périodiquement la transmission d'un ou de plusieurs sous-messages parmi une série restante de sous-messages qui n'ont pas encore été transmis au lecteur.

2. Carte à microprocesseur selon la revendication 1, **caractérisée en ce que** ledit module séparé comprend un algorithme (ALG2) qui est séparé du système d'exploitation (ALG1) et qui interagit avec un algorithme de traitement du système d'exploitation (ALG1) de façon à interrompre ledit algorithme de traitement du système d'exploitation et à déclencher ce faisant la transmission d'un sous-message par le système d'exploitation.

3. Carte à microprocesseur selon la revendication 1, **caractérisée en ce que** ledit module séparé comprend une mémoire pour charger ladite série de sous-messages depuis le système d'exploitation dans ladite mémoire du module séparé, et **en ce que** ledit module séparé déclenche périodiquement la transmission de sous-messages parmi une série restante de sous-messages chargés dans la mémoire du module séparé et qui n'ont pas encore été transmis.

4. Carte à microprocesseur selon la revendication 1, **caractérisée en ce que** le module séparé comprend une horloge pour contrôler dans le temps ledit déclenchement de la transmission de sous-messages.

5. Carte à microprocesseur selon la revendication 1, **caractérisée en ce que** le module séparé comprend un dispositif de traitement séparé qui est séparé dudit processeur et de ladite mémoire implémentant le système d'exploitation.

6. Carte à microprocesseur selon la revendication 1, **caractérisée en ce que** le message initial est un message ATR (Answer-To-Reset, ou réponse d'initialisation).
